# EUROPEAN PATENT APPLICATION

(11) **EP 2 667 039 A2**
(43) Date of publication of application: **27.11.2013**
(21) Application number: 13158361.9
(22) Date of filing: 08.03.2013
(51) Int. Cl.: F15B 11/17

(54) **Pilot pressure supply system**

(30) Priority: 24.05.2012 GB 201209109
(71) Applicant: AGCO International GmbH, 8212 Neuhausen am Rheinfall (CH)
(72) Inventor: Frommelt, Benjamin, 86865 Markt Wald OT Immelstetten (DE)
(74) Representative: AGCO Intellectual Property Department

(57) **Abstract**

A pressurised fluid supply system for an agricultural vehicle (100) includes a main supply circuit (MC) including a variable displacement pump (RP) providing a first source of pressurised fluid to a steering system (SS) of the vehicle and to consumers (WH) connected with the vehicle. A steering supply circuit (SC) includes a fixed displacement pump (LHP) supplying pressurised fluid to the steering system (SS). A pilot pressure circuit (PPC), connectable to supply a second source of pressurised fluid to consumers connected with the vehicle, receives pressurised fluid from the main supply circuit (MC).

## Description

The invention relates to a pressurised fluid supply system provided to supply various consumers in a vehicle, especially consumers in the form of implements attached to an agricultural vehicle such as a tractor. More specifically, the invention relates to a controlled supply system for pilot pressure.

### Background

Mobile fluid (hydraulic) supply systems are often equipped with electronically controlled valves. In general, these valves have a valve spool that is moved by an internal fluid flow called pilot pressure. This valve spool and thereby the fluid flow is controlled by a solenoid, and the pilot pressure must be constantly provided to ensure proper functioning of the valve.

The consumers in a supply system are connected with lines which are also named as circuits in the following description. It will be understood that the term "circuit" as used herein is not limited to a closed loop arrangement of lines and may refer to arrangements as simple as a single line linking two components or consumers.

### Description of Prior Art

When choosing a pump to supply fluid pressure in hydraulic circuits, a trade-off is often needed between cost and efficiency. Pumps with variable displacement are very expensive compared to constant or fixed displacement types so installation is avoided if possible. On the other hand variable displacement pumps deliver fluid only when a demand is present so they are more efficient. Constant delivery pumps have the major disadvantage that, to keep the oil pressure at a constant level to ensure quick supply, the pump must be constantly working against a hydraulic or mechanic resistance (typically spring biased). This reduces efficiency in idle mode.

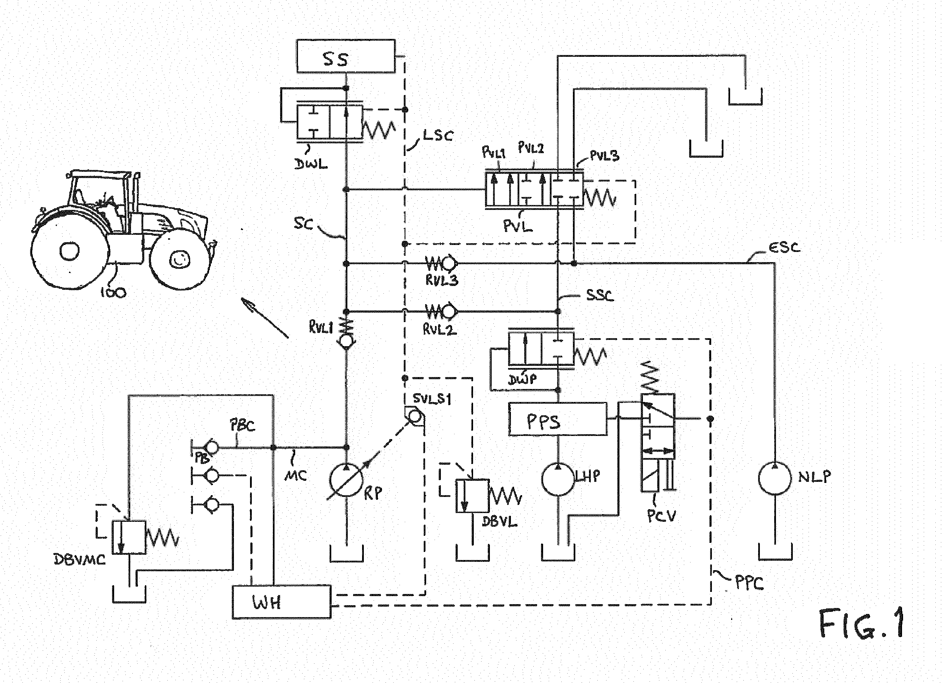

Further issues with the prior art will become apparent when reading the description given below of an example supply system as illustrated in Figure 1 of the attached drawings.

It is an object of the present invention to provide a fluid supply system that addresses the issue of inefficiency, among others.

In accordance with the present invention there is provided a pressurised fluid supply system for an agricultural vehicle, comprising:
a main supply circuit including a variable displacement pump providing a first source of pressurised fluid to a steering system of the vehicle and to consumers connected with the vehicle;
a steering supply circuit including a fixed displacement pump connectable to supply a second source of pressurised fluid to the steering system; and
a pilot pressure circuit connectable to supply a second source of pressurised fluid to consumers connected with the vehicle; wherein the pilot pressure circuit receives pressurised fluid from the main supply circuit.

With the pilot pressure supply being provided by the main circuit variable displacement pump, such that it can be stopped when not required, the inefficiency of the conventional arrangement of a permanently running constant displacement pump is avoided.

Further features and advantages of the invention are recited in the dependent claims attached hereto and/or will become apparent from reading the following description of embodiments of the invention.

Embodiments of the invention will now be described, by way of example only, and with reference to the accompanying drawings in which:
Figure 1 shows for comparison purposes a known pressurised fluid supply system;
Figure 2 shows a pressurised fluid supply system according to the present invention; and
Figure 3 shows an alternative embodiment of the pressurised fluid supply system according to the present invention.

The prior art fluid supply system shown in Figure 1 has three pumps (RP, LHP, NLP) for supplying pressurised hydraulic fluid (oil) to different circuits on an agricultural vehicle such as a tractor (represented at 100).

The main supply pump RP is of variable displacement type and operable to generate a fluid pressure of up to X bar. Pump RP supplies the work hydraulics WH (different consumers on the tractor, for example front and/or rear linkages and main valve manifold) via main supply circuit MC. Main circuit MC furthermore contains a pressure limiting valve DBVMC which ensures that pump RP and all consumers are protected from unintended high pressure in the system, for example if hoses are squeezed and oil flow is blocked which would otherwise result in damage.

In addition, main supply pump RP delivers oil to the steering system SS via steering circuit SC. Steering circuit SC is equipped with a pressure control valve DWL, which is spring biased and ensures that the pressure supplied to the steering does not exceed a level which is greater than 19 bar plus the demand charged by a load sensing signal of the steering system. This valve is optional and typically only used in tractors intended for operation at higher speeds. The limitation of the pressure level by valve DWL has the advantage that pressure variations in the main circuit MC, and thereby also in the steering circuit SC, caused by high demand of consumers leading to increased delivery from the main pump RP up to 200 bar, would otherwise be charged on the steering circuit. This may result in an unmeant movement of the steering system which is dangerous especially at high speed.

Figure 1 also shows a Power Beyond circuit PBC connecting the master circuit MC to a detachable connector system PB. This circuit is used to supply fluid to implements without using on-board control valves on the tractor. This may be used if the implement has very complex hydraulic control functions which cannot be served by the tractor due to control valve limitations. For example, current, high range tractors are equipped with six valves on the rear to controllably supply consumers on an implement but some implements such as towed sprayers need more then ten independent hydraulic control functions. In such instances, only "uncontrolled" oil flow is supplied to the implement and the flow is controlled internally on the implement.

Similar to all other consumers, power beyond circuit PBC includes a load sensing connection and a return line to the tractor oil tank.

The displacement (and thereby mass-flow) of main supply pump RP is controlled by a load-sensing circuit LSC. Generally, the load-sensing circuit LSC is connected to the major consumers (work hydraulics WH and steering system SS) to adapt delivery of main pump RP according to current needs. Load sensing circuit LSC is connected to pressure limiting valve DBVL which opens a vent connection to the fluid tank if pressure in the LSC exceeds X bar. Check valve RVL1 in the SC connection between pump RP and steering system SS restricts flow in one direction to avoid the other pumps counteracting pump RP. Furthermore shuttle valve SVLS1 in the LSC ensures that the highest load sensing pressure / signal coming from the steering system SS OR from the work hydraulics WH is forwarded to the main supply pump RP. The valve SVLS1 also ensures that the load sensing signals of steering system SS and work hydraulics WH cannot counteract one another, providing a hydraulic OR connection.

The steering pump LHP (pressure supply X bar) is a constant displacement pump driven by the vehicle engine and delivering fluid into a secondary steering circuit SSC which links the pump via components PPS and DWP (described below) to a prioritisation valve PVL and also to the steering circuit SC. Pump LHP is provided to support the main supply pump RP in delivering oil to the steering system SS. This mainly happens if the main supply pump RP is overloaded and is not capable of providing the needed fluid pressure for the steering function. This may occur if the steering moves very fast or the main supply circuit MC and connected consumers WH demand too much oil flow. Check valve RVL2 in the connection between pump LHP and steering system SS restricts flow in one direction to avoid pumps LHP and RP counteracting each other. As the steering pump LHP is of constant displacement type, the pump is constantly driven which reduces efficiency.

The third pump is an emergency steering pump NLP (pressure supply X bar) and a respective emergency steering circuit ESC is provided in the system linking the pump to the prioritisation valve PVL and also to the steering circuit SC. Different to the other pumps, emergency steering pump NLP is not driven by the engine, but driven by the ground-engaging wheels. Due to legal requirements, this pump is required as a redundancy cover for the pumps RP and LHP mentioned above to ensure continuation of the steering function by steering system SS in case of failure by either or both of pumps RP and LHP. As the emergency steering pump NLP is driven by movement of the tractor, engine stall would not prevent it from functioning. The emergency steering pump NLP is of a smaller type than RP or LHP because legal requirements only demand a basic emergency steering function requiring higher steering forces of the driver (just like in car without servo support): typical values in terms of oil flow capability would have LHP with a flow of 22 to 60 litre per minute depending on engine speed, and NLP 0-30 litre per minute depending on vehicle speed. Check valve RVL3 in the connection between pump NLP and the steering system SS restricts flow in one direction to avoid pumps RP and NLP counteracting each other.

The prioritisation and supply of the steering system by steering prioritisation valve PVL is now described. Prioritisation valve PVL has three positions PVL1, PVL 2 and PVL 3 and is biased on one side by a load-sensing signal (pressure from load sensing circuit LSC) and a two stepped spring set to 10 bar (PVL1) and 6 bar (PVL2). The conditions driving the selection of each PVL position are as follows:
PVL1: The main supply pump RP is operationally capable of maintaining the basic pressure of 19 bar (set by valve DWL) plus the required pressure for the steering function (charged via load-sensing circuit LSC). Pressure in the steering circuit SC is > 10 bar plus the load-sensing signal, so steering prioritisation valve PVL is moved into position PVL1. In this position, the outputs from both steering pump LHP and emergency steering pump NLP are connected to the fluid tank.
PVL2: The main supply pump RP is NOT capable of maintaining the basic pressure of 19 bar (set by valve DWL) plus the required pressure for the steering function (charged via load-sensing circuit LSC). This may occur if the consumers WH have a high demand or a very fast steering movement occurs. Pressure in the steering circuit SS falls below 10 bar plus the load-sensing signal, so steering prioritisation valve PVL is moved into position PVL2. In this position, connection of steering pump LHP to the fluid tank is blocked and instead steering pump LHP supplies steering circuit SC via check valve RVL2. In position PVL2, emergency steering pump NLP is still connected to the fluid tank.
PVL3: The combined contributions of main supply pump RP and steering pump LHP is NOT capable to maintain the basic pressure of 19 bar (set by valve DWL) plus the required pressure for the steering function (charged via load-sensing circuit LSC). This may occur if one or both of the pumps RP and LHP fail. Pressure in the steering circuit SS falls below 6 bar, so steering prioritisation valve PVL is moved into position PVL3. In this position, connection of steering pump LHP and emergency steering pump NLP to the fluid tank is blocked and emergency steering pump NLP supplies steering circuit SC via check valve RVL3. In position PVL3, steering pump LHP is still connected to steering circuit SC to support the steering function if possible (for example if a temporary failure occurred). In Figure 1, the prioritisation valve PVL is in position PVL3.

A further circuit, named the pilot pressure circuit PPC, is installed to provide valves in the work hydraulics WH with the needed pilot pressure as described above. The pilot pressure circuit PPC with a pilot pressure system PPS supplied by steering pump LHP can be deactivated by means of pilot control valve PCV. This deactivation of the hydraulic consumers in the working circuit WH is needed during road travel according to legal requirements to prevent the possibility of, for example, a plough being lowered onto a road. Furthermore, the control valves used in the work hydraulics WH are equipped with a valve spool position control. If, in case of failure (e.g. cable break) a valve spool is making unintended movements, pilot control valve PCV is immediately deactivated to keep the current state. If pilot control valve PCV is in a first position PCV1, as shown in Figure 1, pilot pressure is deactivated and pilot pressure circuit PPC is connected to the fluid tank so that no consumer valve can be supplied with pressure to move the valve spool. In the second position PCV2 the pilot pressure circuit PPC is connected to steering pump LHP and consumers on the tractor via pilot pressure circuit PPC. A further pilot pressure control valve DWP ensures that the pump LHP provides a pressure which is higher than the sum of the spring load of valve DWP (10 bar) plus the required pilot pressure of 18 bar.

In Figure 1, steering system SS, work hydraulics WH and pilot pressure system PPS are only shown schematically by boxes. These systems may internally contain various hydraulic components such as valves etc. known in the art to provide the respective functions, As these components are not relevant for the invention, they are not described in detail.

Considering the arrangement of Figure 1, it is evident that the steering pump LHP is constantly working against the spring load of 10 bar in control valve DWP when the pilot pressure is deactivated (for example when transporting on road) and against 10 bar plus 18 bar when pilot pressure is activated. This results in major energy losses and reduced efficiency, not only in operational mode but also in an idle mode where no pilot pressure is needed.

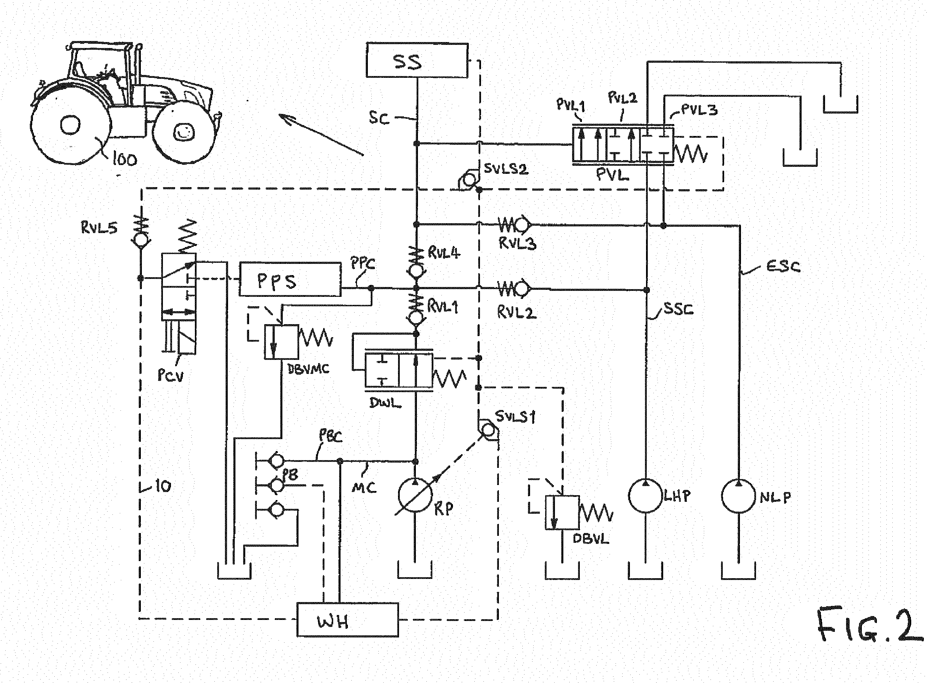

According to the invention, an improved supply system is provided as shown in Figure 2. Where the components are the same as for Figure 1, they will not be again described.

The principal difference in the circuit of Figure 2 is the removal of the pilot pressure supply circuit PPC and the associated pilot control valve PCV from the output line of the steering pump LHP. Instead, the circuit PPC is connected on the output side of pressure control valve DWL to receive the controlled fluid pressure from the main (variable displacement) pump RP. The pilot control valve PCV is operable to either connect the PPC to provide pilot pressure to the working hydraulics WH via line 10 or (as shown) to cut the pilot supply for road working and the like.

An additional check valve RVL4 separates the input to the PPC from the steering system input from the emergency pump NLP. In this arrangement, the pressure delivered by steering pump LHP contributes some (with RP) of the input to the PPC, depending on the setting of the prioritisation valve PVL, but emergency pump NLP remains isolated from the PPC by valve RVL4.

The pilot pressure (when connected) is supplied via a further check valve RVL5 to the prioritisation valve PVL which selectively connects the pumps LHP and NLP to the steering circuit SC, as in Figure 1. A shuttle valve SVLS2 is installed between the branch of the load sensing circuit LSC of the steering system SS and pilot pressure circuit PPC. Due to this, prioritisation valve PVL is biased on one side by a load-sensing signal which is charged by the load sensing signal of the steering system SS and/or the pilot pressure circuit PPC. Thereby, prioritisation valve PVL does not only maintain pressure level for the steering system SS (supplied by main supply pump RP, steering pump LHP, or emergency steering pump NLP as described in relation to Figure 1), but also maintains the pressure level of the pilot pressure system/circuit PPS/PPC.

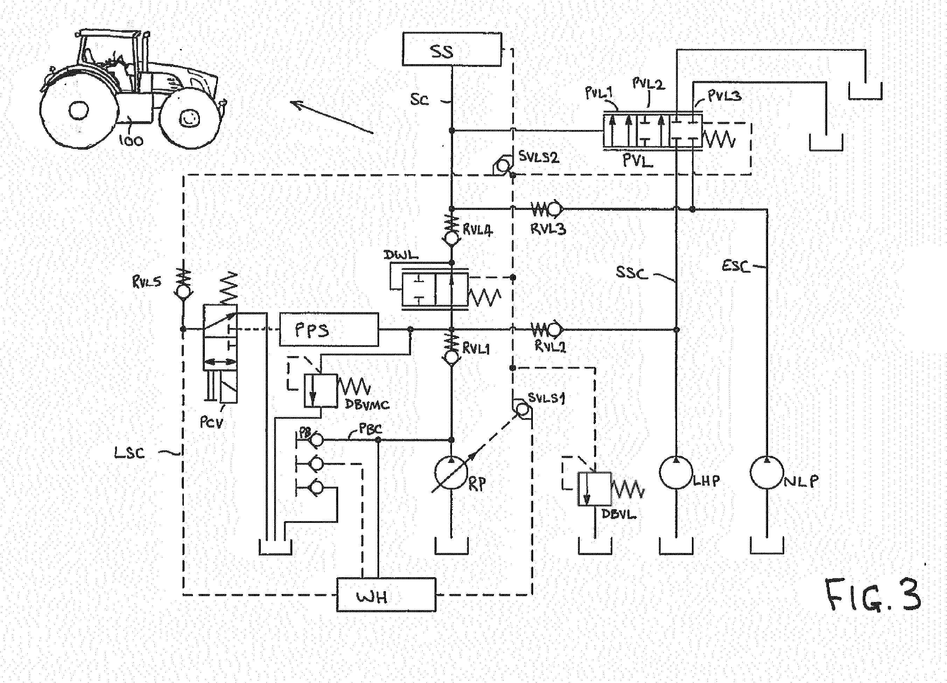

Figure 3 shows an alternative embodiment of the invention with the only difference that the position of pressure control valve DWL has been changed. The position of pressure control valve DWL shown in Figure 2 has the potential disadvantage that any failure in the function of pressure control valve DWL, for example if the valve becomes stuck in the left position, the pressure level provided by pump RP would sharply rise which may cause damage to the pump RP. In the arrangement of Figure 3 it can be seen that, if pressure control valve DWL fails, pressure limiting valve DBVMC would discharge overpressure to tank and thereby protect pump RP.

Compared to the prior art arrangement of Figure 1, the applicants have recognised that, with pilot pressure being taken instead from the main circuit MC, pilot pressure is available to be supplied under all conditions in operation, when not deactivated willingly by pilot pressure control valve PCV.

In particular, with pilot pressure supplied by a variable displacement pump system, overall efficiency of the system is improved as oil is supplied only if needed (for example the new system would not "waste" energy if valves are not operated) and the steering pump LHP is no longer required to work against the spring load of pressure control valve DWP even in idle mode when pilot pressure is not supplied. Furthermore, simply supplying the pilot pressure with main pump RP may result in situations where the demand of for example the work hydraulics WH could lead to a drop-down of the pilot pressure level which would thereby result in functional problems of the work hydraulics WH. As shown in Figure 2 and 3 by connecting main pump RP and steering LHP to the pilot pressure circuit PPC gives an improved supply as two pumps are connected. In addition, pilot pressure circuit PPC is connected to the steering prioritisation valve PVL, so that supply of the steering system SS of the pilot pressure circuit PPC is prioritised.

## Claims

1. A pressurised fluid supply system for an agricultural vehicle, comprising:
a main supply circuit (MC/SC) including a variable displacement pump (RP) providing a first source of pressurised fluid to a steering system (SS) of the vehicle and to consumers (WH) connected with the vehicle;
a steering supply circuit (SSC) including a fixed displacement pump (LHP) connectable to supply a second source of pressurised fluid to the steering system (SS); and
a pilot pressure circuit (PPC) connectable to supply a second source of pressurised fluid to consumers (WH) connected with the vehicle;
wherein the pilot pressure circuit (PPC) receives pressurised fluid from the main supply circuit (MC/SC).

2. A system as claimed in Claim 1, including a prioritisation valve (PVL) having at least two valve (spool) positions with spool movement in a first direction being driven by steering circuit fluid pressure and opposed by pilot pressure circuit fluid pressure.

3. A system as claimed in Claim 2, further comprising an emergency steering circuit (ESC) including a ground-speed driven pump (NLP) supplying pressurised fluid to the steering system (SC).

4. A system as claimed in Claim 3, wherein the prioritisation valve (PVL) has three spool positions, respectively in which:
- both the steering supply circuit and the emergency steering circuit supply pressurised fluid to the steering system (PVL3);
- the steering supply circuit supplies pressurised fluid to the steering system and the emergency steering circuit is disconnected therefrom (PVL2);
- both the steering supply circuit and the emergency steering circuit are disconnected from the steering system (PVL1).

5. A system as claimed in Claim 1, further comprising a pilot control valve (PCV) to deactivate pilot pressure supply.

6. A system as claimed in Claim 1, wherein a pilot control valve (PCV) is connected to variable displacement pump (RP) via a load-sensing circuit (LSC).

7. An agricultural vehicle (100) including a pressurised fluid supply system as claimed in any of Claims 1 to 6.
